Europäisches Patentamt

European Patent Office

Office européen des brevets

(11) Publication number: 0 407 097 A2

# EUROPEAN PATENT APPLICATION

(21) Application number: 90307094.4

(22) Date of filing: 28.06.90

(51) Int. Cl.5: C08L 23/02, C08L 21/00, B65D 19/24, B65D 19/32

(30) Priority: 28.06.89 JP 163647/89

(43) Date of publication of application:
09.01.91 Bulletin 91/02

(84) Designated Contracting States:
DE FR GB IT

(71) Applicant: NIPPON PETROCHEMICALS
COMPANY, LIMITED
3-1, Uchisaiwaicho 1-chome Chiyoda-ku
Tokyo(JP)

(72) Inventor: Aida, Fuyuki
1-30-3 Higashi-Mukojima, Sumida-ku
Tokyo(JP)
Inventor: Miyazaki, Masaaki
3-35-2 Okubo, Konan-ku
Yokohama-shi, Kanagawa-ken(JP)
Inventor: Miyamoto, Tsutomu
200-262 hayao, Tone-cho
Kitasoma-gun, Inaragi-ken(JP)

(74) Representative: Cropp, John Anthony David et
al
MATHYS & SQUIRE 10 Fleet Streeteet
London, EC4Y 1AY(GB)

(54) Sheet pallet.

(57) A sheet pallet having improved properties is molded using a thermoplastic resin composition containing a partially crosslinked product which is obtained by dynamically heat-treating:
(A) a thermoplastic resin, and/or
(B) a rubbery substance,
in the presence of a crosslinking agent and, if desired, a polyfunctional monomer, the said sheet pallet having a loading surface whose frictional coefficient is larger than that of the back side thereof, and also having a thickness of 0.3 to 10 mm.

EP 0 407 097 A2

## SHEET PALLET

### BACKGROUND OF THE INVENTION

The present invention relates to a sheet pallet and particularly to a cold-resistant or highly rigid sheet pallet.

More particularly, the present invention is concerned with a sheet pallet molded using a thermoplastic resin containing a partially crosslinked product which is obtained by dynamically heat-treating a thermoplastic resin and a rubbery substance in the prescnce of a specific crosslinking agent and a polyfunctional monomer, the sheet having a loading surface whose frictional coefficient is larger than that of the back side thereof. This sheet pallet is superior in mechanical strength such as rigidity and also superior in workability. By selecting specific resin and other components there can be attained high cold resistance and high rigidity.

With the recent resources saving, systems which utilize sheet pallets of a light and simple structure are becoming more and more popular rapidly in place of the conventional wooden pallets and plastic pallets also in the goods distribution field.

Sheet pallets have many advantages, for example:

(a) The space for storage can be saved.

(b) inexpensive.

(c) Recovery can be omitted as the case may be.

(d) Easy to manufacture.

(c) The working efficiency can be improved.

Sheet pallets are manufactured using plastics as main materials, and there have been proposed various sheet pallets having characteristic structures, shapes and compositions.

For example, there is disclosed a "goods carrying base" in Japanese Utility Model Publication No. 16821/1980, which is for the conveyance and transfer of packaged goods. According to the technique disclosed therein, at least the upper surface of a sheet pallet of a polyolefin resin 0.5 to 3.2 mm in thickness is formed as a rough surface, rougher than lower surface thereof, whereby a static friction coefficient between the upper surface and goods is made larger than a sliding friction coefficient between the lower surface and a platen to make the loading work smooth.

In Japanese Patent Publication No.1023/1983 there is disclosed a "slip pallet". This pallet is characterized in that a foamed sheet formed using a polyolefin resin as a main component and having an apparent specific gravity of 0.4 to 0.7 is scribed and that tabs are provided in one or more positions of the sheet peripheral edge. Thus, there has been proposed a sheet pallet which intends to prevent the breakage of such scribed portion and improve the impact resistance.

By these conventional methods there have been obtained sheet pallets which are satisfactory to some extent in such basic properties as strength and the resistance to water, to oils, to chemicals, to heat and to impact.

As a material for improving cold resistance and impact resistance there has also been developed a blend composition of propylene block copolymer or polypropylene and ethylene-propylene copolymer rubber.

For example, in Japanese Patent Laid Open No.174233/1987 there is disclosed a "cold-resistant sheet pallet" which is molded using a composition comprising a propylene polymer and a specific ethylene-$\alpha$-olefin copolymer to improve cold resistance.

Also known is a composition comprising polypropylene, ethylene-propylene copolymer rubber and polypropylene, (see, for example, Japanese Patent Publication Nos.18746/1964 and 7345/1966 and Japanese Patent Laid Open No.104334/1980).

Recently, however, physical distribution has become more complicated, and with expansion of the range of use, superior characteristics at both high and low temperatures are required. Particularly, when the use at an ultra-low temperature such as in a cold district or in a refrigerator is considered, the improvement of low-temperature impact resistance is more and more important in addition to high strength and heat resistance.

In ordinary plastic materials, such properties as strength, rigidity and heat resistance are contrary to low-temperature impact resistance, so it has been keenly desired to develop a sheet pallet which takes the balance between these properties into account.

The present invention has been accomplished in view of the above-mentioned points. It is an object of the invention to provide a sheet pallet improved in brittle temperature and superior in the balance between rigidity and low-temperature impact resistance and also superior in workability.

It is another object of the present invention to provide a cold-resistant sheet pallet which is not only superior in mechanical characteristics and appearance but also remarkably improved in low-temperature impact resistance and rigidity.

It is a further object of the present invention to provide a sheet pallet having high rigidity and heat resistance.

## SUMMARY OF THE INVENTION

Having made extensive studies along the above-mentioned objects, the present inventors found that a sheet pallet having extremely high cold resistance and rigidity can be obtained by using a sheet formed of a thermoplastic resin containing a partially crosslinked product which is obtained by dynamically heat-treating a thermoplastic resin and/or a rubbery substance in the presence of a crosslinking agent and, if desired, a polyfunctional monomer. In this way we accomplished the present invention.

More specifically, the present invention, in one aspect thereof, resides in a sheet pallet formed using a thermoplastic resin composition containing a partially crosslinked product which is obtained by dynamically heat-treating:

(A) a thermoplastic resin, and/or

(B) a rubbery substance,

in the presence of a crosslinking agent and, if desired, a polyfunctional monomer, the said sheet pallet having a loading surface whose frictional coefficient is larger than that of the back surface thereof, and also having a thickness of 0.3 to 10 mm.

The present invention, in the second aspect thereof, resides in a cold-resistant sheet pallet molded using a thermoplastic resin composition containing a partially crosslinked product which is obtained by dynamically heat-treating:

($A_1$) 30-95 wt% of $\alpha$-olefin (co)polymer having 3 to 8 carbon atoms, as a thermoplastic resin;

5-70 wt% of

($A_2$) a polyethylene resin, as a thermoplastic resin and/or

(B) a rubbery substance;

0.01-7 parts by weight, based on 100 parts by weight of $A_1$ + $A_2$ + B, of at least one crosslinking agent selected from:

(C) a dihydroaromatic series compound or a polymer thereof,

(D) an ether series compound,

(E) a tetrahydroaromatic series compound, and

(F) a cyclopentane series compound; and

0.01-7 parts by weight, based on 100 parts by weight of $A_1$ + $A_2$ + B, of

(G) a polyfunctional monomer,

the said cold-resistant sheet pallet having a loading surface whose frictional coefficient is larger than that of the back surface thereof, and having a thickness of 0.3 to 10 mm.

The present invention, in the third aspect thereof, resides in a sheet pallet of high rigidity comprising 100 parts by weight of the thermoplastic resin composition described in the above first or second aspect and:

(H) 3-50 parts by weight of an inorganic filler, the said sheet pallet having a loading surface whose frictional coefficient is larger than that of the back surface thereof, and having a thickness of 0.3-10 mm.

## DETAILED DESCRIPTION OF THE INVENTION

As examples of the thermoplastic resin(s) used in the present invention there are mentioned polyethylene resins such as high and medium density polyethylenes, high pressure process low-density polyethylenes, linear low-density polyethylenes (LLDPE), very-low density polyethylenes (VLDPE), copolymers of ethylene and other $\alpha$-olefins, ethylene-unsaturated carboxylates, e.g. ethylene-vinyl acetate copolymer, and ethylene-unsaturated carboxylate copolymers, e.g. ethylene-ethyl (meth)acrylate; polypropylene resins such as homopolypropylene and propylene-$\alpha$-olefin block copolymers; polyolefin resins such as poly-1-butene, copolymers of 1-butene and other $\alpha$-olefins, and poly-4-methyl-1-pentene; as well as polystyrene resins, polyacrylonitrile resins, poly(meth)acrylate resins, polyamide resins, polyester resins, and polyacetal resins.

3

At least one of these plastic resins is used. Particularly, $\alpha$-olefin (co)polymers having 2 to 8 carbon atoms are preferred.

The above very-low density polyethylenes (VLDPE) indicate polyethylenes not higher than 0.910 g/cm$^3$ in density and having properties intermediate between linear low-density polyethylenes and ethylene-$\alpha$-olefin copolymer rubbers.

For example, the polyethylenes in question are specific ethylene-$\alpha$-olefin copolymers each having a density of 0.860 to 0.910 g/cm$^3$ and a maximum peak temperature (Tm) of not lower than 50°C as measured according to differential scanning calorimetry (DSC), and they are prepared using a catalyst comprising a solid catalyst component and an organoaluminum compound, the solid catalyst component containing magnesium and titanium.

The VLDPE is a resin having both a high crystalline portion which a linear low-density polyethylene exhibits and an amorphous portion which an ethylene-$\alpha$-olefin copolymer rubber exhibits. High mechanical strength and heat resistance which are the features of the former and superior rubbery elasticity and low-temperature impact resistance which are the features of the latter, are present in the VLDPE in a well-balanced state. The use thereof in the present invention is extremely useful because it can afford a thermoplastic resin composition superior in performance over a wide range, as will be described later.

By changing the kind and proportions of the thermoplastic resin used there can be obtained cross linked, thermoplastic resin compositions of a wide range having various characteristics.

As examples of the $\alpha$-olefin (co)polymer having 3 to 8 carbon atoms used as component ($A_1$) in the present invention, there are mentioned homopolymers of $\alpha$-olefins such as polypropylene, poly-1-butene, poly-4-methyl-1-pentene and polyhexene-1, as well as copolymers of these $\alpha$-olefins. Particularly, poly-propylene resins (PP) are preferred because they are inexpensive and superior in the balance of various physical properties such as mechanical characteristics, e.g. rigidity, heat resistance, and the appearance of shaped products, e.g. gloss.

More concrete examples include isotactic polypropylene, syndiotactic polypropylene, propylene-ethylene block copolymer, propylene-ethylene random copolymer, and propylene-1-butene copolymer.

It is desirable that the copolymers exemplified above contain at least 60 wt% of propylene. They may be used each alone or as mixtures.

As examples of the rubbery substance (B) used in the present invention there are mentioned ethylene-$\alpha$-olefin copolymer rubbers typified by ethylene-propylene random copolymer rubber and ethylene-propylene-diene random copolymer rubber; as well as natural rubbers, isobutene rubber, butadiene rubber, 1,2-polybutadiene, styrene-butadiene random copolymer rubber, chloroprene rubber, nitrile rubber, styrene-butadiene-styrene block copolymer rubber, and styrene-isoprene-styrene block copolymer rubber. These may be used each alone or as mixtures.

Particularly, ethylene-propylene-diene random copolymer rubber and ethylene-propylene random copolymer rubber are preferred. These two rubbers, as compared with the other rubbery substances, are superior in thermoplasticity and can be easily dispersed by melt kneading. Besides, they do not have any peculiar odor in comparison with SBR, isoprene rubber, nitrile rubber and butadiene rubber. Further, the two rubbers in question are available as Pellets so are easy to weigh and handle in the mixing operation, and also as to the type of the composition manufacturing apparatus, they have a high degree of freedom of selection. Thus, they have advantages in operation.

As the diene component in the above ethylene-propylene-diene random copolymer rubber, there may be used any of ethylidene norbornene, dicyclopentadiene and 1,4-cyclohexadiene.

It is desirable that these rubbery substances range from 10 to 100, more preferably 20 to 90, in terms of Mooney viscosity $ML_{1+4}$. If the value $ML_{1+4}$ is smaller than 10, the impact resistance will be little improved, and if it is larger than 100, the dispersion into the matrix resin will be poor.

As the crosslinking agent in the invention there may be used any commercially available ones such as hydroperoxides, dialkylperoxides, diacylperoxides, peroxy esters, and ketone peroxides. More concrete examples are dicumyl peroxide, di-t-butyl peroxide, 2,5-dimethyl-2,5-di(t-butylperoxy)hexane, 2,5-dimethyl-2,5-di(t-butylperoxy)-3-hexyne, 1,3-bis(t-butylperoxyisopropyl)benzene, azo compounds such as azobisisobutyronitrile, organic peroxides such as benzoyl peroxide arid acetyl peroxide, iron (II) salt + peroxide, sulfite + persulfate, and benzoyl peroxide + dimethylaniline. Particularly, 1,3-bis(t-butylperoxyisopropyl)benzene is preferred in regard to odor and scorch stability. It is more preferable to use the crosslinking agent(s) (C)-(F) and the polyfunctional monomer (G) in combination with each other.

The dihydroaromatic series compound (C) used as a crosslinking agent in the present invention is a compound containing one or more aromatic rings, of which one aromatic ring is dihydrogenated. The aromatic ring as referred to herein indicates a ring structure having 4n + 2 (n is an integer) $\pi$-electrons shown in the definition of aromaticity [see, for example, "Yuki Kagaku-no Kiso," Tokyo Kagaku Dojin K.K.

4

(1976), translated by Toshio Goto, pp.105-106, (Richard S. Mon-son & John C. Shelton, "Fundamentals of Organic Chemistry," MacGraw-Hill Inc. (1974) ]. Pyridine and quinoline are included as examples. Therefore, examples of the dihydroaromatic compounds used in the present invention include dihydro drivatives of quinoline. Further, the dihydroaromatic compound used in the present invention may contain a substituent group. Alkyl substituted compounds, as well as derivatives substituted with various elements and functional groups, are employable.

The dihydroaromatic series compound used in the invention can be prepared by a known chemical reaction. Examples of those available at present are 1,2-dihydrobenzene, cis-1,2-dihydrocatechol, 1,2-dihydronaphthalene, 9, 10-dihydrophenanthrene, as well as 1,2-dihydroquinoline compounds such as 6-decyl-2,2,4-trimethyl-1,2-dihydroquinoline, 6-ethoxy-2,2,4-trimethyl-1,1,2-dihydroquinoline, and 2,2,4-trimethyl-1,2-dihydroquinoline. Polymers of these compounds are also employable.

Among the dihydroaromatic series compounds employable in the present invention there are included those which have heretofore been known as antioxidant agents (see, for example, Japanese Patent Publication No. 46661/1980), but these have been used not as crosslinking agents but together with conventional crosslinking agents such as sulfur compounds, organic peroxides, phenolic compounds and quinone dioxime compounds.

Thus, the prior art is lacking in the knowledge of the present invention, i.e., the knowledge that dihydroaromatic compounds and polymers exhibit crosslinking-reactivity, or the knowledge of the effect that a combined use of such dihydroaromatic compound and a polyfunctional monomer permits a mild crosslinking reaction to proceed.

The ether series compound (D) used as crosslinking agent in the present invention may be straight-chained or cyclic, or may contain a substituent group. Examples are cyclic ethers such as 1,3-dioxolan and 1,4-dioxane; straight chain ethers such as ethyl ether and isopropyl ether; non-aromatic cyclic vinyl ethers typified by 3,4-dihydro-2-pyran and 4H-chromene; furan derivatives typified by furfuryl alcohol, furfuryl aldehyde, benzo-furan and furfuryl acetate; straight chain vinyl ether compounds typified by n-octadecyl vinyl ether and ethyl vinyl ether; enol ethers and enol ester of carbonyl compounds such as ketones, esters, lactones, aldehydes, amides and lactams typified by ketene acetal, isopropenyl acetate, vinyl acetate and 1-amino-1-methoxyethylene. These compounds may contain substituent groups. Alkyl substituted compounds as well as derivatives substituted with various elements and functional groups. And these compounds may be used each alone or as mixtures. Particularly, vinyl or alkenyl ethers are preferred.

The tetrahydroaromatic serics compound (E) used as a crosslinking agent in the present invention indicates a compound in which at least one aromatic ring is tetrahydrogenated. The said aromatic ring has the same meaning as in the foregoing definition of aromaticity. For example, furan, benezene and naphthalene are included, while pyran is excluded. Therefore, examples of the tetrahydroaromatic compound used in the present invention include tetrahydro derivatives of naphthalene. Further, the tetrahydroaromatic compound in question may contain a substituent group. Alkyl substituted compounds and derivatives substituted with various elements and functional groups are also employable. The tetrahydroaromatic compound used in the invention can be prepared by a known chemical reaction. Examples of those available at present include 1,2,3,4-tetrahydronaphthalene, tetrahydrobenzene and tetrahydrofuran. Polymers of these compounds are also employable.

The cyclopentane series compound used as a crosslinking agent in the present invention is a compound containing at least one cyclopentane, cylopentene or cylopentadiene skeleton. That is, the compound (F) is a five-membered compound whose ring is constituted by only carbon atoms. Examples include cyclopentane, cylopentadiene, cyclopentene, dicyclopentadiene, indene, indane, and fluorene. Of course, these compounds may contain substituent groups. Alkyl substituted compounds and derivatives substituted with various elements and functional groups are employable. And these compounds may be used each alone or as mixtures.

In the present invention it is necessary to use the polyfunctional monomer (G) together with at least one crosslinking agent selected from the above components (C), (D), (E) and (F).

Examples of the polyfunctional monomer (G) include higher esters of methacrylic acid typified by trimethylolpropane trimethacrylate and ethylene glycol dimethacrylate; polyfunctional vinyl monomers typified by divinylbenzene, triallyl isocyanurate and diallyl phthalate; and bis-maleimides typified by N,N'-m-phenylene bismalemide and N,N'-ethylene bismaleimide. Particularly, bismaleimide compounds and di-(meth)acrylate compounds are preferred because these compounds are highly reactive and the addition of polar groups leads to the improvement in dispersibility and receptivity of fillers such as inorganic fillers and flame retardants, e.g. metal oxides. These compounds may be used in combination of two or more.

The partially crosslinked product in the present invention is obtained by mixing the above thermoplastic resin, rubbery substance, crosslinking agent and polyfunctional monomer in advance or at time of heat treatment and then dynamically heat-treating the resulting mixture.

The partially crosslinked composition obtained by dynamic heat treatment indicates a composition obtained by melt-kneading the said mixture which composition has an increased boiling xylene insolubles content as compared with the value before the kneading.

As one criterion for the effects of the present invention there is mentioned such increase of the boiling xylene insolubles content attained by the said heat treatment.

Generally, the higher the boiling xylene insolubles content, the more remarkable the improvement in the effect of addition of rubbery substances, including the improvement in impact resistance and tensile strength.

Such increase of the boiling xylene insolubles content depends mainly on the amount of the crosslinking agent and that of the polyfunctional monomer. But these amounts differ depending on the kind of the crosslinking agent used and that of an activator used as well as the apparatus and conditions adopted for melt kneading.

The temperature of the above dynamic heat treatment should be not lower than the melting point(s) or softening point(s) of the thermoplastic resin(s) and/or the rubbery substance and below the decomposition point(s) thereof. More specifically, it is preferred that the dynamic heat treatment be carried out at a temperature in the range of 120° to 350°C for 20 seconds to 20 minutes.

Preferably, the melt kneading is performed using a mixing machine which affords a high shear rate to facilitate the formation of radical in the mixture.

As a melt-kneading apparatus for performing the dynamic heat treatment there may be used any of known apparatus, including open type mixing rolls, non-open type Bumbury's mixer, extruder, kneader, and twin-screw extruder.

The partially crosslinked product thus obtained may be used alone or as a mixture with another thermoplastic resin. But at the time of molding sheet by extrusion or the like as will be described below, the components may be dynamically heat-treated to obtain the partially crosslinked product.

The sheet pallet of the present invention is produced as follows. The composition described above is formed into sheet by a conventional method such as extrusion (e.g. T die method) or calendering, and the whole or a desired portion of a loading surface of the sheet is roughened by surface treatment such as embossing, sandblasting, corona discharge, flame treatment, or plasma treatment, or an anti-slipping material such as ethylene-vinyl acetate copolymer or synthetic rubber is laminated by sticking to the loading surface of the sheet, thereby increasing the frictional coefficient of the loading surface to prevent slipping or collapse of goods.

The frictional coefficient just referred to above differs depending on the kind of the packaging material for goods, for example, whether it is paper or plastic, as well as the shape of the bottom of goods and the weight thereof. But for the surface of cardboard for example, a suitable static frictional coefficient of the upper surface is in the range of 0.2 to 0.8, preferably 0.3 to 0.7.

The thickness of the sheet pallet of the present invention is in the range of 0.3 to 10 mm, preferably 0.5 to 5 mm. If the sheet pallet thickness is smaller than 0.3 mm, the mechanical strength such as rigidity of the sheet will be poor, and if it exceeds 10 mm, an increased weight thereof may be an obstacle to the automation of loading and unloading works and the handling of goods although the characteristics required in the present invention will be satisfied.

The cold-resistant sheet pallet of the present invention is formed using the foregoing thermoplastic resin composition containing the partially crosslinked product described above which is obtained by dynamically heat-treating 30-95 wt% of the component ($A_1$), 5-70 wt% of the component ($A_2$) and/or the component (B), 0.01-7 parts by weight, based on 100 parts by weight of $A_1 + A_2 + B$, of at least one crosslinking agent selected from the components (C), (D), (E) and (F), and 0.01-7 parts by weight of the component (G) based on 100 parts by weight of $A_1 + A_2 + B$. The frictional coefficient of the loading surface of the sheet pallet is larger than that of the back surface thereof, and the thickness of the sheet pallet is in the range of 0.3 to 10 mm.

Target values in properties of the cold-resistant sheet pallet of the present invention include a flexural rigidity of not lower than 5,000 kgf/cm² and a brittle temperature of not higher than -50°C.

In order to satisfy these properties it is necessary to mix the above components in thc above proportions.

In the crosslinked product used in the present invention, if the proportion of the component ($A_1$) is smaller than 30 wt%, the product obtained will be inferior in rigidity and heat resistance although the impact resistance thereof will be improved, and if the proportion thereof exceeds 95 wt%, the impact resistance will not be improved sufficiently particularly at low temperatures.

The crosslinking agent and the polyfunctional monomer are used each in an amount of 0.01 to 7,

6

preferably 0.05 to 4, parts by weight based on 100 parts by weight of the thermoplastic resin(s) (A) and/or the rubbery substance (B). If this amount is smaller than 0.01 part by weight, the effect of crosslinking will be low, and an amount of each of the components in question exceeds 7 parts by weight will cause bleeding to the surface, coloration and increase of the cost in the case of the polyfunctional monomer, or will cause coloration and increased cost in the case of the crosslinking agent. Thus, both such amounts are not desirable.

As the constituents of the components ($A_1$), ($A_2$), (B) and of the crosslinking agent and the polyfunctional monomer there basically may be used those exemplified previously. But in the case of polypropylene (pp), its Melt Flow Rate is in the range of 0.1 to 50, preferably 0.5 to 20, g/10 min.

If there is used a PP having a high MFR, due to a too great difference in viscosity between it and the rubbery substance at the time of melt kneading, it will be impossible to obtain a satisfactory state of dispersion, resulting in deteriorated impact resistance and drawdown and the product obtained being difficult to be formed into a shape.

If there is used a PP having a low MFR, there will be obtained only a composition haivng fluidity which is unsatisfactory for extrusion.

As preferred examples of the polyethylene resin ($A_2$) there are mentioned high pressure process low-density polyethylenes, linear low-density polyethylenes and very -low density polyethylenes.

The sheet pallet of high rigidity in the third aspect of the present invention, as described previously, comprises 100 parts by weight of the thermoplastic resin composition described above and 3-50 parts by weight of an inorganic filler (H). This sheet pallet is a high rigidity sheet pallet having a loading surface whose frictional coefficient is larger than that of the back side thereof, and having a thickness of 0.3 to 10 mm.

If the amount of the inorganic filler used is smaller than 3 wt%, there will not be attained a sufficient improvement of rigidity, and if it exceeds 50 wt%, the impact resistance of the composition obtained will be poor.

As the inorganic filler (H) there may be used any of known powdery, flat plate-like, scale-like, needle-like, spherical, hollow and fibrous fillers. Examples are powdered fillers such as calcium carbonate, magnesium carbonate, calcium sulfate, siliceous sand calcium, clay, diatomaceous earth, talc, alumina, glass powder, iron oxide, metal powder, graphite, silicon carbide, silicon nitride, silica, boron nitride,aluminium nitride, and carbon black; metallic foils such as mica, glass plate, sericite, pyrophyllite, and aluminium flake; flat plate-like or scale-like fillers such as graphite; hollow fillers such as Shirasu balloon, metal baloon and pumice; and mineral fibers such as glass fibers, carbon fibers, graphite fibers, whiskers, metallic fibers, silicon carbide fibers, asbestos, and wollastonite.

These inorganic fillers may be used each alone or as mixtures. The kind and amount of the inorganic filler to be used may be determined according to the purpose of use. Prior to use, these inorganic fillers may be subjected to a surface treatment using, for example, a silane coupling agent, an organic titanate-based coupling agent, or a metallic salt of a fatty acid, in order to improve the dispersibility thereof.

The inorganic filler (H) may be added the whole amount thereof or in a suitably divided manner during and/or after the above heat treatment. But it is preferable that inorganic filler be melt-kneaded together with the other components in the heat treatment.

It is important that the composition used in the present invention contain the partially crosslinked product described above.

As the resin incorporated in the partially cross linked product there may be used the foregoing component (A) and/or component (B). No special limitation is placed on the resin provided the resin used is within the scope not departing from the gist of the present invention.

In the composition used in the present invention there may be incorporated stabilizer, antioxidant, ultraviolet ray absorber, lubricant, foaming agent, antistatic agent, flame retardant, plasticizer, dye, and pigment, if necessary.

The sheet pallet of the present invention is formed using the composition described above which contains the partially crosslinked product also described above and obtained by dynamically heat-treating the thermoplastic resin(s) and/or the rubbery substance in the presence of the crosslinking agent and, if desired, the polyfunctional monomer. Thus, since the composition used in the present invention contains such crosslinked product, it is superior in chemical properties such as the resistance to water, oils and chemicals and can withstand repeated use. Besides, since it is a crosslinked composition, it is much superior in the balance of strength, rigidity, heat resistance and low-temperature impact resistance as compared with conventional compositions. Particularly, since the improvement of the brittle temperature has been attained, the sheet pallet of the present invention can be used under ultra-low temperature environments for a long period without any trouble.

7

Examples

The following examples are given to illustrate the present invention more concretely, but it is to be understood that the invention is not limited thereto.

< Resins, etc. used >

Component (A): Thermoplastic Resin

(A₁) Propylene block copolymer
(Ethylene about 10 wt%, MFR = 1.5 g/10 min.)
(A₂₋₁) High-density polyethylene
(Density 0.956 g/cm³, MFR = 1.6 g/10 min, Trade name: Nisseki Staflene E715, a product of Nippon Petrochemicals Co., Ltd.)
(A₂₋₂) Ethylene-Butene-1 copolymer
An ethylene-butene-1 copolymer was prepared by copolymerizing ethylene and butene-1 in the presence of a catalyst comprising a solid catalyst component and triethylaluminum, the said solid catalyst component having been obtained using substantially anhydrous magnesium chloride, 1,2-dichloroethane and titanium tetrachloride.
This ethylene-butene-1 copolymer had a butene-1 content of 10 mole%, a density of 0.900 g/cm³, a Tm of 120°C, a C₆ insolubles content of 82 wt% and an MFR of 1.5 g/10 min.
(A₂₋₃) Ethylene-Propylene copolymer
An ethylene-propylene copolymer was prepared by copolymerizing ethylene and propylene in the presence of a catalyst comprising a solid catalyst component and triethylaluminum, the solid catalyst component having been obtained using substantially anhydrous magnesium chloride, anthracene and titanium tetrachloride.
This ethylene-propylene copolymer had a propylene content of 14 mole%, a density of 0.900 g/cm³, a Tm of 119°C, a C₆ insolubles content of 82 wt% and an MFR of 1.3 g/10 min.
(A₂₋₄) Ethylene-Butene-1 copolymer
An ethylene-butene-1 copolymer was prepared using a catalyst comprising vanadyl trichloride and ethylaluminum sesequichloride. This copolymer had a butene-1 content of 5 mole%, a density of 0.895 g/cm³, a Tm of 81°C, a C₆ insolubles content of 82 wt% and an MFR of 3.5 g/10 min.

Component (B): Rubbery Substance

(B₁) Ethylene-Propylene random copolymer rubber (2)
(trade name: EP07P, $ML_{1+4}$ = 70, a product of Japan Synthetic Rubber Co., Ltd.)
(B₂) Ethylen-Propylen-Diene random copolymer rubber (1)
(trade name: EP57P, $ML_{1+4}$ = 88, a product of Japan Synthetic Rubber Co., Ltd.)

Component (C): Dihydroaromatic Compound

(C₁) Poly(2,2,4-trimethyl-1,2-dihydroquinoline)
(trade name: Nocrac 224S, a product of Ohuchi Shinko Kagaku K.K.)

Component (D): Ether Compound

(D₁) 3,4-Dihydro-2-Dyran (a product of Tokyo Kasei K.K.)
(D₂) Isopropenyl acetate (a product of Tokyo Kasei K.K.)

Component (E): Tetrahydroaromatic Compound

(E₁) 1,2,3,4-Tetrahydronaphthalene (a product of Tokyo Kasei K.K.)
(E₂) Tetrahydrobenzene (a product of Tokyo Kasei K.K.)

Crosslinking Agent (F): Cyclopentane Compound

8

(F₁) Indene

Polyfunctional Monomer (G)

(G₁) N,N'-m-Phenylene bismaleimide
(Vulnoc PM, a product of Phuchi Shinko Kagaku K.K.)
(G₂) Ethylene glycol dimethacrylate (a product of Tokyo Kasei K.K.)

Inorganic Filler (H)

(H₁) Talc

Others (I)

(I₁) $\alpha, \alpha'$-Bis(t-butylperoxy)-m-diisopropylbenzene (trade name: Perbutyl P, a product of Nippon Oils & Fats Co., Ltd.)

Preparation of Test Pieces

Polypropylene resin (A₁), high and very-low density polyethylenes (A₂), rubbery substances (B), crosslinking agents (C),(D),(E),(F),(I) and polyfunctional monomers (G) were mixed together in the respective proportions shown in Table-1 by means of a Henschel mixer. The mixtures thus obtained were each dynamically heat-treated by melt-kneading at a resin temperaturae of 180°-260°C and at a revolution of 200 rpm, using a continuous twin-screw extruder (30 mm dia., a product of plastic Kagaku Kenkyu-Sho K.K.).

Test pieces were formed by presssing and subsequent annealing, unless otherwise described.

Testing and Measurement Methods

(MFR)

According to JIS K6760, JIS K6758 and JIS K7210.
(Yield Tensile Strength), (Ultimate Tensile Strength) and (Ultimate Elongation Length).
According to JIS K6760, JIS K6758 and JIS K7113.
(Boiling Xylene Insolubles Content)
A 20 mm x 50 mm x 0.2 mm film formed by pressing was put on a 120 mesh wire gauze and immersed in boiling xylene for 5 hours. Then, the weight of the film before the immersion and that after the immersion were measured, and a coiling xylene insolubles content was determined from the following equation:

$$\text{Boiling Xylene insolubles content (wt\%)} = \frac{\text{Film weight (g) after immersion in boiling xylene}}{\text{Film weight (g) before immersion in boiling xylene}} = 100$$

(How to measure Maximum Peak Temperature (Tm) by Differential Scanning Calorimetry (DSC))

This temperature was measured as a meltig point of an very-low density polyethylene. About 5 mg of sample is weighed from a 100 μm thick film obtained by hot pressing, then set to a DSC device, and the temperature is raised to 170°C, at which temperature the sample is held for 15 minutes, followed by cooling to 0°C at a cooling rate of 2.5°C/min. Then, from this state, the temperature is raised to 170°C at a rate of 10°C/min, and the temperature in the vertex position of the maximum peak out of peaks appeared during the heating from 0°C to 170°C is regarded as Tm.

(How to determine Boiling n-Hexane Insolubles Content)

a 200 μm thick sheet is formed using a hot press, from which are cut out three 20 mm x 30 mm sheets. Using these three sheets, extraction is performed in boiling n-hexane for 5 hours by means of a double-tube type Soxhlet extractor. Then, n-hexane insolubles are taken out and vacuum-dried (at 50°C for 7 hours). Thereafter, a boiling n-hexane insolubles content is calculated by the following equation:

$$\text{Boiling n-hexane insolubles content (wt\%)} = \frac{\text{Sheet weight after extraction}}{\text{Sheet weight before extraction}} \times 100$$

Examples 1-7 and Comparative Examples 1-5

The partially crosslinked product obtained as above was extrusion-molded into a sheet of 1.8 mm in thickness and 1,600 m in width by means of an extrusion molding machine (120 mmφ) at a resin temperature of 235°C, a chill-roll temperature of 100°C and a taking-up speed of 2 m/min. Then a sheet pallet material was prepared by embossing on the loading surface (upper surface) of the sheet.

Compositions and properties of various sheet pallet materials thus produced are set forth in table 1.

Measurement methods of the properties are as follows:

Flexural Rigidity: JIS K7106

Brittle Temperature: JIS K6760

<Results of Evaluation>

In all of the working Examples of the present invention, as is apparent from Table-1, the compositions obtained are high in flexural rigidity, sufficiently low in brittle temperature, and superior in the balance of rigidity and low-temperature impact resistance.

On the other hand, in the Comparative Examples, the said balance is not satisfactory, and it was impossible to satisfy both high rigidity and low-temperature impact resistance.

## Table 1 (1/2)

| Item / Example | A1 Poly-propylene | | A2-1 High Density Poly-ethylene | Ethylene-$\alpha$-Olefin Copolymer | | (B) Rubbery Substance, Inorganic Filler | |
|---|---|---|---|---|---|---|---|
| | Kind | Amount (wt%) | Amount (wt%) | Kind | Amount (wt%) | Kind | Amount (wt%) |
| Ex. 1 | A1 | 70 | 25 | | | B1 | 5 |
| Comp. Ex. 1 | A1 | 70 | 25 | | | B1 | 5 |
| Ex. 2 | A1 | 65 | 25 | A2-2 | 10 | | |
| Ex. 3 | A1 | 65 | 25 | A2-3 | 10 | | |
| Ex. 4 | A1 | 60 | 32 | A2-4 | 8 | | |
| Comp. Ex. 2 | A1 | 60 | 32 | A2-4 | 8 | | |
| Ex. 5 | A1 | 60 | 30 | A2-2 | 5 | B2 | 5 |
| Comp. Ex. 3 | A1 | 60 | 30 | A2-2 | 5 | B2 | 5 |
| Comp. Ex. 4 | A1 | 70 | 30 | | | | |
| Ex. 6 | A1 | 70 | 3 | A2-3 | 27 | H1 | 11 |
| Ex. 7 | A1 | 90 | | | | B2 | 10 |
| Comp. Ex. 5 | A1 | 90 | 6 | | | B2 | 4 |

A1   : Propylene block copolymer
A2-1: High density polyethylene
A2-2: Ethylene-butene-1 copolymer
A2-3: Ethylene-propylene copolymer
A2-4: Ethylene-$\alpha$-olefin copolymer
H1   : Talc
B1   : Ethylene-propylene copolymer rubber
B2   : Ethylene-propylene-diene copolymer rubber

## Table 1 (2/2)

| Item / Example | Cross-linking Agent Amount (part by weight) | (G) Functional Monomer Amount (part by weight) | Physical Properties Yield Tensile Strength (kgf/cm²) | Ultimate Tensile Strength (kgf/cm²) | Ultimate Elongation Length (%) | Boiling Xylene Insolubles Content (wt%) | Properties of Sheet Pallet Material Flexural Rigidity (kgf/cm²) | Brittle Temperature (°C) |
|---|---|---|---|---|---|---|---|---|
| Ex. 1 | C1 0.5 | G1 0.6 | 270 | 250 | 640 | 12 | 6,300 | -51 |
| Comp. Ex. 1 | | G1 0.6 | 260 | 230 | 610 | 1 | 6,300 | -45 |
| Ex. 2 | D1 0.5 | G2 0.6 | 270 | 230 | 610 | 23 | 6,100 | -54 |
| Ex. 3 | E1 0.3 | G1 0.6 | 230 | 205 | 570 | 25 | 5,700 | -52 |
| Ex. 4 | E2 0.5 | G1 0.6 | 250 | 220 | 600 | 27 | 5,900 | -51 |
| Comp. Ex. 2 | E1 0.6 | G1 0.7 | 220 | 195 | 590 | 2 | 5,900 | -47 |
| Ex. 5 | D1 0.5 | G1 0.6 | | | | 30 | 5,700 | -54 |
| Comp. Ex. 3 | | G2 0.6 | 290 | 270 | 600 | 20 | 5,700 | -48 |
| Comp. Ex. 4 | F1 0.5 | G1 0.6 | 200 | 180 | 620 | 26 | 6,500 | -42 |
| Ex. 6 | F1 0.5 | G1 0.6 | | | | 10 | 5,600 | <-70 |
| Ex. 7 | D2 0.5 | G2 0.5 | | | | 4 | 6,000 | -55 |
| Comp 5 | D1 0.4 | G2 0.5 | | | | | 8,000 | -40 |

A1 : Propylene block copolymer
A2-1: High density polyethylene
A2-2: Ethylene-butene-1 copolymer
A2-3: Ethylene-propylen coplymer
A2-4: Ethylene-$\alpha$-olefin copolymer
H1 : Talc
B1 : Ethylene-propylene copolymer rubber
B2 : Ethylene-propylen-diene copolymer rubber

**Claims**

1. A sheet pallet molded using a thermoplastic resin composition containing a partially crosslinked product which is obtained by dynamically heat-treating:

(A a thermoplastic resin, and/or

(B) a rubbery substance,

in the presence of a crosslinking agent and, if desired, a polyfunctional monomer, the said sheet pallet having a loading surface whose frictional coefficient is larger than that of the back surface thereof, and also having a thickness of 0.3 to 10 mm.

2. A cold-resistant sheet pallet formed using a thermoplastic resin composition containing a partially crosslinked product which is obtained by dynamically heat-treating:

($A_1$) 30-95 wt% of $\alpha$-olefin (co)polymer having 3 to 8 carbon atoms, as a thermoplastic resin:

5-70 wt% of

($A_2$) a polyethylene resin, as a thermoplastic resin, and/or

(B) a rubbery substance:

0.01-7 parts by weight, based on 100 parts by weight of $A_1$ + $A_2$ + B, of at least one crosslinking agent selected from:

(C) a dihydroaromatic series compound or a polymer thereof,

(D) an ether series compound.

(E) a tetrahydroaromatic series compound, and

(F) a cyclopentane series compound; and

0.01-7 parts by weight, based on 100 parts by weight of $A_1$ + $A_2$ + B, of

(G) a polyfunctional monomer,

the said cold-resistant sheet pallet having a loading surface whose frictional coefficient is larger than that of the back side thereof, and having a thickness of 0.3 to 10 mm.

3. A sheet pallet of high rigidity comprising 100 parts by weight of the thermoplastic resin composition of claim 1 or 2 and:

(H) 3-50 parts by weight of an inorganic filler, the said sheet pallet having a loading surface whose frictional coefficient is larger than that of the back side thereof, and having a thickness of 0.3-10 mm.

4. A sheet pallet as set forth in any of Claims 1 to 3, wherein the rubbery substance is ethylene-propylene random copolymer rubber or ethylene-propylene-diene random copolymer rubber.

5. A sheet pallet as set forth in Claim 2 or 3, wherein the dihydroaromatic serics compound (C) is a 1,2-dihydroquinoquinoline compound or a polymer thereof, the ether series compound (D) is a dihydropyran or isopropenyl acetate, the tetrahydroaromatic series compound (E)' is 1,2,3,4-tetrahydronaphthalene, tetrahydrobenzene or tetranydrofuran, and the cyclopentane compound is indene.

6. A sheet pallet as set forth in Claim 2 or 3, wherein the polyfunctional monomer is a bismaleimide compound or a di(meth)acrylate compound.